# EUROPÄISCHE PATENTSCHRIFT

(11) **EP 3 168 673 B1**
(45) Veröffentlichungstag und Bekanntmachung des Hinweises auf die Patenterteilung: **21.08.2019**
(21) Anmeldenummer: 16197140.3
(22) Anmeldetag: 03.11.2016
(51) Int. Cl.: G02B 27/22, G02B 21/36, H04N 13/111, G06F 16/51

(54) **SYSTEM ZUR VISUALISIERUNG VON BILDDATEN**
SYSTEM FOR THE VISUALIZATION OF IMAGE DATA
SYSTÈME DE VISUALISATION DE DONNÉES D'IMAGE

(30) Priorität: 13.11.2015 DE 102015222489
(43) Veröffentlichungstag der Anmeldung: 17.05.2017
(73) Patentinhaber: Fraunhofer-Gesellschaft zur Förderung der angewandten Forschung e.V., 80686 München (DE)
(72) Erfinder: Bindl, Thomas, 91052 Erlangen (DE); Benz, Michaela, 91052 Erlangen (DE); Münzenmayer, Christian, 91469 Hagenbüchach (DE)
(74) Vertreter: Schenk, Markus

(56) Entgegenhaltungen:
- EP-A1- 2 687 891
- WO-A1-03/073365
- US-A1- 2004 167 806
- US-A1- 2015 015 578
- BEYNON M D ET AL: "The virtual microscope", IEEE TRANSACTIONS ON INFORMATION TECHNOLOGY IN BIOMEDICINE, IEEE SERVICE CENTER, LOS ALAMITOS, CA, US, Bd. 7, Nr. 4, 1. Dezember 2003 (2003-12-01), Seiten 230-248, XP011106562, ISSN: 1089-7771, DOI: 10.1109/TITB.2004.823952
- CHIALIN CHANG ET AL: "T2", SIGMOD RECORD, ACM, NEW YORK, NY, US, Bd. 27, Nr. 1, 1. März 1998 (1998-03-01), Seiten 58-66, XP058219458, ISSN: 0163-5808, DOI: 10.1145/273244.273264
- TROTTS ET AL: "Interactive visualization of multiresolution image stacks in 3D", NEUROIMAGE, ELSEVIER, AMSTERDAM, NL, Bd. 35, Nr. 3, 4. April 2007 (2007-04-04), Seiten 1038-1043, XP022335908, ISSN: 1053-8119, DOI: 10.1016/J.NEUROIMAGE.2007.01.013

## Beschreibung

Die vorliegende Erfindung betrifft ein System zur Visualisierung von digitalisierten Bilddaten mit mindestens einer Bilddatenquelle und einer Bilddatensenke. Weiterhin bezieht sich die Erfindung auf ein entsprechendes Verfahren zur Visualisierung von digitalisierten Bilddaten. Die Erfindung bezieht sich vorzugsweise jeweils auf eine webbasierte Echtzeitvisualisierung von digitalisierten Bilddaten.

Die digitalisierten und zu visualisierenden Bilddaten stammen beispielsweise von einem Mikroskop, welches mit einer Kamera und einer entsprechenden Verarbeitungseinheit, z. B. einem Computer gekoppelt ist. Für die möglichst vollständige Aufnahme der Probe wird zumeist die Probe lateral und auch vertikal (also in z-Richtung) relativ zum Objektiv des Mikroskops bewegt. Die Visualisierung wird beispielsweise beschrieben in der US 2015/0015578 A1, der US 2004/0167806 A1 oder der DE 699 25 084 T2. Ein virtuelles Mikroskop ist ebenfalls Gegenstand der WO 03/073365 A1.

Bilddaten von Aufnahmen, die aus unterschiedlichen lateralen Bereichen stammen, werden im Folgenden als Sichtfeld bezeichnet. Die Anzahl der Sichtfelder hängt dabei hauptsächlich von den Eigenschaften des Objektivs des Mikroskops, der Größe des zu betrachtenden Bereichs und der Pixelgröße der Kamera ab. Werden an einer lateralen Position Aufnahmen an verschiedenen z-Positionen, also in unterschiedlichen Höhenlagen erstellt, so wird für die Gesamtheit der zugeordneten Bilddaten die Bezeichnung Bildstapel verwendet. Die Gesamtheit aller Sichtfelder und Bildstapel schließlich wird als digitaler Slide bezeichnet. Wie im Folgenden ausgeführt, wird dies noch durch unterschiedliche Auflösungen ergänzt.

Der Begriff Echtzeitvisualisierung beschreibt generell eine für den Betrachter flüssige Darstellung der Bilddaten, ohne dass Nachladeprozesse, welche funktional im Hintergrund ablaufen, bemerkbar sind.

Im Anwendungsbeispiel der digitalen Mikroskopie bezieht sich die Echtzeitvisualisierung sowohl auf den Zoomvorgang in die Bilddaten hinein als auch auf den Wechsel des angezeigten Bildes von einem Bildstapel zum anderen. Hierdurch soll ein "Scharfstellen" wie beim Mikroskop nachempfunden werden.

Ist beispielsweise ein Slide mit 900 Sichtfelder (inkl. Bildstapel mit je 11 Ebenen) gegeben, so benötigt dieser ungefähr 30 GB Speicherplatz. Solche Datenmengen lassen sich jedoch nicht in Echtzeit über das Web visualisieren, so dass im Stand der Technik bereits Verfahren zum Umgang mit solchen Datenmengen bekannt sind.

Bedingt ist die Echtzeitvisualisierung von der Größe des darzustellenden Bereichs, so dass die Darstellung der Bilddaten im Vollbildmodus auf einem kleinen Monitor flüssiger laufen kann als auf einem großen Monitor. Ein weiterer Einflussfaktor ist die Geschwindigkeit der Internetanbindung für die Übertragung der Bilddaten über das Web.

Bei der Echtzeitvisualisierung von großen 2D-Bilddaten im Webbrowser gibt es verschiedene Anforderungsstufen. Soll das Bild ohne Zoomfunktion dargestellt werden, so ist in aller Regel eine Unterteilung des Bildes in kleinere Bildkacheln zur flüssigen Darstellung eines Bildausschnitts ausreichend. Dabei werden nur die jeweils benötigten Bildkacheln übertragen.

Im Fall einer Zoomfunktion wird das gesamte Bild zusätzlich in kleineren Auflösungen abgespeichert. Durch das Abspeichern des Bildes in mehreren Auflösungsebenen erhöht sich jedoch die Datenmenge.

Spezielle Konvertierungsmethoden zur Reduzierung der Datenmenge versuchen, redundante Informationen zu vermeiden. So werden beispielsweise die Bilddaten in den niedrigeren Auflösungsstufen nicht gespeichert, sondern berechnet. Dies lässt sich vorteilhaft anwenden, wenn sich die Bildinhalte nur wenig voneinander unterscheiden. Bildstapel mit sehr unterschiedlichen Inhalten können hingegen nicht wesentlich effizienter gespeichert werden.

Ein großer Nachteil der empfängerseitigen bzw. serverseitigen Konvertierung von großen Bilddaten ist zum einen die dadurch entstehende Latenzzeit und zum anderen die erforderliche Rechenleistung.

Der Umgang mit großen Bilddatenmenge hat dabei nicht nur das Anwendungsgebiet der digitalen Mikroskopie, sondern ergibt sich beispielsweise auch für den Umgang mit Sattelitendaten oder Hyperspektralaufnahmen. Die Bilddaten werden dabei in der Regel von einer Bilddatenquelle zu einer Bilddatensenke übertragen, die ein ständiges oder ggf. nur temporär auftretendes System zur Visualisierung von Bilddaten bilden.

Der Erfindung liegt daher die Aufgabe zugrunde, ein System zur Visualisierung und ein entsprechendes Verfahren vorzuschlagen, die die Nacheile des Standes der Technik vermeiden und die es vor allem erlauben, Bildstapel möglichst ressourcenschonend und möglichst flüssig zu visualisieren. Die Aufgabe bezieht sich dabei insbesondere auf die zuvor beschriebenen dreidimensionalen Bilddaten, die mehreren Schichten in zumindest teilweise unterschiedlichen Auflösungen zugeordnet sind.

Die Erfindung löst die Aufgabe im Hinblick auf das System zur Visualisierung eines Vorgangs eines Scharfstellens dadurch, dass digitalisierte Bilddaten mindestens zwei unterschiedlichen Schichten zugeordnet sind, dass für die mindestens zwei unterschiedlichen Schichten Bilddaten in jeweils mindestens zwei unterschiedlichen Auflösungen vorliegen und dass die mindestens zwei unterschiedlichen Schichten eine gleiche Szene mit unterschiedlichen Aufnahmebedingungen zeigen. Dabei ist die Bilddatenquelle derartig konfiguriert, Bilddaten zur Bilddatensenke zu übermitteln. Die Bilddatenquelle ist derartig konfiguriert, die Bilddaten nur einer vorgebbaren Referenzschicht in den mindestens zwei voneinander unterschiedlichen Auflösungen in zunehmender Auflösung von der Bilddatenquelle zu der Bilddatensenke zu übermitteln. Zudem ist die Bilddatensenke derartig konfiguriert, Bilddaten von der Bilddatenquelle zu empfangen und in Bezug auf eine Visualisierung zu verarbeiten. Weiterhin ist die Bilddatenquelle derartig konfiguriert, Bilddaten der Referenzschicht in den mindestens zwei unterschiedlichen Auflösungen vorrangig zu den Bilddaten von von der Referenzschicht unterschiedlichen Schichten zu der Bilddatensenke zu übermitteln. Weiterhin ist die Bilddatenquelle derartig konfiguriert, nur in einem Nachladefall, dass die Bilddatenquelle die Bilddaten der Referenzschicht mit einer vorgebbaren Referenzauflösung an die Bilddatensenke übermittelt hat, die Bilddaten von einer vorgebbaren Anzahl von von der Referenzschicht unterschiedlichen Schichten nur in einer vorgebbaren Nachladeauflösung zu der Bilddatensenke zu übermitteln. Dabei handelt es sich bei der Referenzauflösung um die für die Schichten in den Bilddaten jeweils maximal vorhandene Auflösung.

Die Bilddaten beziehen sich auf mehrere und insbesondere mindestens zwei Schichten, die die gleiche Szene, z. B. ein Messobjekt oder eine Arrangement von mehreren Objekten oder Gegenständen zeigen, die jedoch unter unterschiedlichen Aufnahmebedingungen aufgenommen worden sind. Die Bilddaten sind beim Anwendungsfall der Mikroskopie zwei-dimensionale Schichten in der x-y-Ebene, die sich hinsichtlich des Abstands - als Objektabstand oder Gegenstandsweite - zwischen dem Messobjekt und dem Objektiv voneinander unterscheiden. Die Schichten sind somit unterschiedlichen Höhe entlang der z-Achse zugeordnet. In einer alternativen oder ergänzenden Ausgestaltung ist die Aufnahmebedingung die Einstellung der Schärfentiefe. In einer zusätzlichen - alternativen oder ergänzenden - Ausgestaltung bezieht sich die Aufnahmebedingung auf den jeweils verwendeten Spektralbereich, so dass die Anwendung des Systems im Bereich der Visualisierung von Hyperspektralaufnahmen liegt.

Zudem liegen für mindestens die Referenzschicht die Bilddaten mit unterschiedlichen Auflösungen vor, d. h. für mindestens eine Schicht ist die gleiche Szene wenigstens einmal mit besserer und einmal mit schlechterer Auflösung gezeigt.

Die Auflösung gehört dabei nicht zu den für die Unterscheidung der Schichten voneinander relevanten Aufnahmebedingungen.

Die Bilddatenquelle überträgt bzw. übermittelt somit vorrangig die Bilddaten der einen Referenzschicht, die in mindestens zwei Auflösungen vorliegt. Die Bilddaten der Referenzschicht werden dabei in einer Ausgestaltung in mehreren Auflösungen und in einer zusätzlichen Ausgestaltung in allen für die Referenzschicht vorhandenen Auflösungen übertragen, zumindest jedoch in den mindestens zwei vorhandenen Auflösungen.

Die Bilddaten der anderen Schichten werden nachrangig zu dieser einen Schicht übertragen. Diese Vorrangigkeit bzw. Nachrangigkeit kann darin bestehen, dass die Bilddaten der anderen Schichten erst nach der Übertragung der Bilddaten der einen Schicht in den unterschiedlichen Auflösungen geladen und somit nach-geladen werden. Weiterhin kann dies darin bestehen, dass von den anderen Schichten die Bilddaten nur in einer Auflösung übertragen werden oder dass nicht die Bilddaten von allen anderen Schichten übertragen werden.

In einer Ausgestaltung definieren die Aufnahmebedingungen eine Schärfentiefeneinstellung, eine Gegenstandsweite oder eine spektrale Empfindlichkeit. Die Aufnahmebedingungen beziehen sich dabei generell auf die Art, mit der die Bilddaten gewonnen werden.

Dabei liegen die Bilddaten für die mindestens zwei unterschiedlichen Schichten jeweils in mindestens zwei unterschiedlichen Auflösungen vor. In einer darauf bauenden Ausgestaltung beziehen sich die Bilddaten auf eine Mehrheit von Schichten, die jeweils in mehreren Auflösungen vorliegen. Dies führt prinzipiell zu einer großen Datenmenge auf der Seite der Bilddatenquelle.

Davon ausgehend ist die Bilddatenquelle derartig konfiguriert, die Bilddaten einer der mindestens zwei unterschiedlichen Schichten - bzw. in der weiteren oberen Ausgestaltung der mehreren vorliegenden Schichten - als sogenannte Referenzschicht in den mindestens zwei unterschiedlichen Auflösungen an die Bilddatensenke zu übermitteln.

Die eine vorrangig zu behandelnde Schicht wird hier als Referenzschicht bezeichnet. Dese Schicht ist dabei beliebig vorgebbar, indem erfindungsgemäß ein Benutzer auf der Seite der Bilddatensenke eine Schicht auswählt. Die Auswahl einer Schicht geschieht beispielsweise während der Datenübertragung oder während der Visualisierung.

Die nachrangige Übermittlung der von Referenzschicht unterschiedlichen Schichten ist an eine gleichsam die Übermittlung auslösende Bedingung gekoppelt.

Hierfür wird ein Nachladefall definiert, der darin besteht, dass die Bilddatenquelle die Bilddaten der Referenzschicht mit einer vorgebbaren Referenzauflösung an die Bilddatensenke übermittelt hat.

Liegt dieser Fall vor, so ist die Bilddatenquelle derartig konfiguriert, die Bilddaten von einer vorgebbaren Anzahl von von der Referenzschicht unterschiedlichen Schichten nur in einer vorgebbaren Nachladeauflösung zu der Bilddatensenke zu übermitteln.

Mit anderen Worten: Für die Echtzeitvisualisierung werden die Bilddaten einer Referenzschicht mit unterschiedlichen Auflösungen (also zumindest zwei voneinander unterschiedlichen Auflösungen) von der Bilddatenquelle zur Bilddatensenke übertragen. Dies ist gleichsam der Startschritt der Datenübertragung. Die Bilddaten der anderen Schichten werden erst dann übertragen, wenn die Bilddaten der einen Referenzschicht mit einer vorgebbaren Referenzauflösung übertragen worden sind. Dies ist dann der sogenannte Nachladefall. Erst in diesem Fall findet das Nachladen der Bilddaten der übrigen Schichten statt. Die vorzugebende Anzahl der im Nachladefall zu ladenden Schichten ist in einer Ausgestaltung gleich der Anzahl der vorhandenen anderen und von der Referenzschicht unterschiedlichen Schichten. Die nachgeladenen Bilddaten der von der Referenzschicht unterschiedlichen Schichten werden dabei nur mit einer vorgebbaren Nachladeauflösung übertragen. Diese Nachladeauflösung ist dabei wie die Referenzauflösung eine der Auflösungen, über die die Schichten in den Bilddaten verfügen.

Als Vorteil ergibt sich eine effiziente Visualisierung der Bilddaten nahezu in Echtzeit ohne Blending oder Ladeartefakte. Durch die im System realisierte Nachlademethode entsteht für den Betrachter der visuelle Effekt des Scharfstellens wie am Mikroskop selbst.

Ein wesentlicher Vorteil im Anwendungsfeld der Mikroskopie ist, dass das Nachladen von Bilddaten abhängig von der Zoomtiefe ist. Dadurch werden Bildkacheln in niedrigeren Auflösungsebenen nur aus einer z-Ebene - also aus der Ebene der Referenzschicht - geladen. Erst in der höchsten Auflösung - als einem Beispiel der Referenzauflösung - werden die Bilddaten der anderen Schichten der Bildstapel nachgeladen. Deshalb werden insgesamt deutlich weniger Bilddaten übertragen.

Für das Beispiel des mikroskopischen Anwendungsfalls und der Variante der z 0-Ebene als Referenzschicht baut die Erfindung auf der Überlegung, dass ein Zoomen aus einer von der z 0-Ebene unterschiedlichen Schicht in der Regel nicht gefordert ist.

In einer Ausgestaltung werden für die in mehrere Sichtfelder unterteilten Referenzschicht die Bilddaten eines ausgewählten Sichtfeldes in den mindestens zwei Auflösungen von der Bilddatenquelle übertragen. Beim Nachladen wird in einer damit verbundenen Ausgestaltung anschließend von den anderen Schichten ebenfalls dieses Sichtfeld übertragen. In einer Ausgestaltung werden die Bilddaten jeweils nur eines Sichtfeldes übertragen. In einer alternativen Ausgestaltung werden die Bilddaten von mehr als einem Sichtfeld pro Schicht übermittelt.

Das in den vorgenannten Ausgestaltungen ausgewählte Sichtfeld wird beispielsweise bei der Anwendung der Mikroskopie durch einen Benutzer ausgewählt, indem er eine laterale Bewegung zwischen der Messszenerie und dem Objektiv bewirkt.

Für die benutzerseitige Auswahl der Schicht, die die Referenzschicht ist, ist erfindungsgemäß die folgende Ausgestaltung vorgesehen.

In dieser Ausgestaltung ist die Bilddatensenke derartig konfiguriert, ein Auswählen zu erlauben, von welcher Schicht die Bilddaten zu visualisieren sind. Der Benutzer kann also beispielsweise einstellen, aus welcher Schicht er die Bilddaten sehen möchte. Damit geht einher, dass die Bilddatensenke derartig konfiguriert ist, die für die Visualisierung ausgewählte Schicht als Referenzschicht zu setzen. Verfährt also im Beispiel der Mikroskopie der Benutzer den Abstand zwischen Messobjekt und Objektiv als Gegenstandsweite, so stellt er damit auch die Schicht ein, die dann die Referenzschicht ist. D. h. für diese Referenzschicht werden dann die Bilddaten der unterschiedlichen Auflösungen geladen und anschließend die Bilddaten der anderen Schichten. Dies ist in einer Ausgestaltung damit verbunden, dass für mehrere Schichten die Bilddaten in unterschiedlichen Auflösungen vorliegen.

Insbesondere für die Ausgestaltung, in welcher von der Referenzschicht bzw. von den vorhandenen Schichten bevorzugt die Bilddaten nur eines Sichtfeldes übertragen werden, besteht daher eine Ausgestaltung darin, dass ein benutzerseitiger Wechsel des relevanten Sichtfeldes die oben beschriebene Übertragung der Bilddaten auslöst.

Bei einer Ausgestaltung wird daher von der Bilddatenquelle mit der Übertragung der Bilddaten im Sinne der obigen Ausführungen begonnen, wenn der Benutzer eine Schicht als Referenzschicht oder das relevante Sichtfeld (sozusagen als Referenzsichtfeld) ausgewählt hat.

Eine Ausgestaltung des Systems bzw. speziell einer Komponente des Systems sieht vor, dass die Bilddatenquelle derartig konfiguriert ist, die Bilddaten nur der vorgebbaren Referenzschicht in mindestens zwei voneinander unterschiedlichen Auflösungen von der Bilddatenquelle zu der Bilddatensenke zu übermitteln. Dies bezieht sich auf den Schritt, der vor dem Nachladefall liegt. Für die Übertragung der Bilddaten werden in dieser Ausgestaltung nur von der Referenzschicht die Bilddaten in unterschiedlichen Auflösungen übertragen.

Weiterhin ist die Bilddatenquelle derartig konfiguriert, nur im Nachladefall die Bilddaten der von der Referenzschicht unterschiedlichen Schichten nur in der vorgebbaren Auflösung von der Bilddatenquelle zu der Bilddatensenke zu übermitteln. Daher werden in dem Fall und nur in dem Fall, dass auch die Bilddaten der anderen Schichten übertragen werden, die zugehörigen Bilddaten nur in einer Nachladeauflösung übertragen.

In einer weiteren Ausgestaltung ist die Bilddatenquelle derartig konfiguriert, im Nachladefall die Bilddaten der von der Referenzschicht unterschiedlichen Schichten mit der Referenzauflösung zu der Bilddatensenke zu übermitteln.

Bei der Referenzauflösung handelt es sich um die für die Schichten in den Bilddaten jeweils maximal vorhandene Auflösung. Somit werden zunächst die Bilddaten der Referenzschicht übertragen, bis die höchste Auflösung erreicht worden ist. Dann werden in einer Ausgestaltung auch für die anderen Schichten die Bilddaten der jeweils zugehörigen höchsten Auflösung geladen.

Alternativ kann die Grenzauflösung auf der Seite der Bilddatensenke jeweils z. B. durch einen Nutzereingriff für den Einzelfall gezielt vorgegeben werden.

Gemäß einer Ausgestaltung ist die Bilddatenquelle mit mindestens einer Bildaufnahmeeinheit - z. B. in Form einer Kamera oder eines Mikroskops - verbunden und erhält die Bilddatenquelle die Bilddaten von der Bildaufnahmeeinheit.

Gemäß einer Ausgestaltung ist die Bilddatensenke derartig konfiguriert, Bilddaten von der Bilddatenquelle abzufragen, und ist die Bilddatenquelle derartig konfiguriert, Bilddaten nach einer Abfrage von der Bilddatensenke an die Bilddatensenke zu übermitteln. Alternativ übersendet die Bilddatenquelle die Bilddaten ohne Abfrage an die Bilddatensenke.

Die Art der Übertragung erfolgt in einer Ausgestaltung dadurch, dass die Bilddatenquelle derartig konfiguriert ist, die jeweilige Szene der Schichten als Kacheln - die in einer Ausgestaltung zu einzelnen Sichtfeldern gehören - zur Bilddatensenke zu übertragen.

Die Erfindung löst die Aufgabe zudem durch eine Vorrichtung zur Übertragung von digitalisierten Bilddaten, umfassend mindestens eine Bilddatenquelle, die konfiguriert ist, Bilddaten, die zumindest zwei unterschiedlichen Schichten zugeordnet sind, auszugeben, so dass für mindestens eine der mindestens zwei unterschiedlichen Schichten als Referenzschicht die Bilddaten in mindestens zwei unterschiedlichen Auflösungen vorliegen. Dabei zeigen die mindestens zwei unterschiedlichen Schichten eine gemeinsame Szene mit unterschiedlichen Aufnahmebedingungen. Die Bilddatenquelle ist derartig konfiguriert, die Bilddaten der Referenzschicht in den mindestens zwei unterschiedlichen Auflösungen vorrangig zu den Bilddaten von von der Referenzschicht unterschiedlichen Schichten zu übertragen. Weiterhin ist die Bilddatenquelle konfiguriert, in einem Fall, dass die Bilddatenquelle die Bilddaten der Referenzschicht mit einer vorgebbaren Referenzauflösung ausgegeben hat, die Bilddaten von einer vorgebbaren Anzahl von von der Referenzschicht unterschiedlichen Schichten auszugeben.

Die obigen Ausgestaltungen und Erläuterungen zu der Bilddatenquelle als Teil des Systems gelten entsprechend auch für die Vorrichtung zur Übertragung der Bilddaten.

So ist in einer Ausgestaltung vorgesehen, dass die Aufnahmebedingungen eine Schärfentiefeneinstellung, eine Gegenstandsweite oder eine spektrale Empfindlichkeit definiert. Die Aufnahmebedingungen sind dabei auch gegeben durch die verwendete Aufnahmemethode.

In einer Ausgestaltung liegen die Bilddaten für die mindestens zwei Schichten in jeweils mindestens zwei unterschiedlichen Auflösungen vor. Hierfür ist die Bilddatenquelle derartig konfiguriert, die Bilddaten einer der mindestens zwei Schichten als Referenzschicht in den mindestens zwei unterschiedlichen Auflösungen auszugeben. Dabei ist eine Schicht als Referenzschicht vor den anderen, zumindest zwei und vorzugweise mehreren Schichten ausgezeichnet und erhält die vorrangige Behandlung.

Die nachrangige Behandlung der anderen Schichten ist wie folgt realisiert. Die Bilddatenquelle ist konfiguriert, in einem Fall (der als Nachladefall bezeichnet werden kann), dass die Bilddatenquelle die Bilddaten der Referenzschicht mit einer vorgebbaren Referenzauflösung ausgegeben hat, die Bilddaten von einer vorgebbaren Anzahl von von der Referenzschicht unterschiedlichen Schichten auszugeben.

Da die Bilddatenquelle die Bilddaten ausgibt, ist ihr auch bekannt, wann die Referenzauflösung ausgeben worden ist. Alternativ findet eine Steuerung der Bilddatenquelle durch die Empfängerseite statt, indem von dort quasi ein Signal gegeben wird, dass die Bilddaten einer erwünschte Auflösung, die damit die Referenzauflösung wird, ausgegeben worden ist, und dass damit mit der nachrangigen Ausgabe der Bilddaten der anderen Schichten begonnen werden kann.

Die Erfindung löst die Aufgabe weiterhin durch das Verfahren zur Visualisierung eines Scharfstellens, wobei digitalisierte Bilddaten mehreren Schichten zugeordnet sind, wobei die Schichten eine gleiche Szenen mit unterschiedlichen Aufnahmebedingungen zeigen und wobei die Bilddaten für die Schichten in unterschiedlichen Auflösungen vorliegen. Die Bilddaten einer Referenzschicht werden in den unterschiedlichen Auflösungen vorrangig zu den Bilddaten von von der Referenzschicht unterschiedlichen Schichten von einer Bilddatenquelle zu einer Bilddatensenke in zunehmender Auflösung übermittelt und in Bezug auf die Visualisierung verarbeitet. In einer Ausgestaltung werden die Bilddaten der Referenzschicht in den mindestens zwei unterschiedlichen Auflösungen übermittelt. Weiterhin werden nur in einem Fall, dass die Bilddaten der Referenzschicht mit einer vorgebbaren Referenzauflösung, bei der es sich um die für die Schichten in den Bilddaten jeweils maximal vorhandene Auflösung handelt, ausgegeben worden sind, die Bilddaten von einer vorgebbaren Anzahl von von der Referenzschicht unterschiedlichen Schichten nur in einer vorgebbaren Nachladeauflösung von der Bilddatenquelle zu der Bilddatensenke übermittelt und ausgegeben.

Die Bilddaten beziehen sich auf mehrere Schichten, wobei eine Schicht als Referenzschicht vorgegeben wird. Die Bilddaten der Referenzschicht liegen dabei in mehreren Auflösungen vor.

In einer Ausgestaltung werden die Bilddaten der vorgebbaren Referenzschicht in mindestens zwei der vorhandenen Auflösungen von eine Bilddatenquelle zu einer Bilddatensenke übermittelt und von der Bilddatensenke in Bezug auf eine Visualisierung verarbeitet.

In einer Ausgestaltung werden dann in dem Fall (in einem sogenannten Nachladefall), dass zur Bilddatensenke die Bilddaten der Referenzschicht mit einer vorgebbaren Referenzauflösung übermittelt worden sind, Bilddaten einer vorgebbaren Anzahl von von der Referenzschicht unterschiedlichen Schichten nur in einer vorgebbaren Nachladeauflösung von der Bilddatenquelle zu der Bilddatensenke übermittelt.

In den Ausgestaltungen des Verfahrens werden zunächst nur von einer Referenzschicht die Bilddaten in unterschiedlichen Auflösungen von der Bilddatenquelle zur Bilddatensenke übertragen. Ist eine vorgebbare Referenzauflösung übertragen worden, so werden erst in diesem Fall des Nachladens der Daten die Bilddaten der anderen Schichten nur in einer für das Nachladen vorgegebenen Nachladeauflösung übertragen. Die Schichten zeigen jeweils eine gemeinsame Szene, die sich in einer Aufnahmebedingung voneinander unterscheiden. Dies ist eben beispielsweise der Objektabstand oder alternativ oder ergänzend die Einstellung der Schärfentiefe oder weiterhin alternativ oder ergänzend der für die Aufnahme verwendete Spektralbereich.

In einer Ausgestaltung ist die Nachladeauflösung die Referenzauflösung und in einer zusätzlichen Ausgestaltung die höchste vorliegende Auflösung.

Erfindungsgemäß ergibt sich der Vorteil der Datenreduktion, indem nur die Bilddaten einer Schicht mit unterschiedlichen Auflösungen übertragen wird.

In dem Verfahren wird die in den Bilddaten maximal vorhandene Auflösung der Referenzschicht als Referenzauflösung vorgegeben.

In einer Ausgestaltung wird z. B. durch einen Benutzer die zu visualisierende Schicht ausgewählt. Diese Schicht wird dann als Referenzschicht gesetzt und die Bilddaten der unterschiedlichen Auflösungen der Referenzschicht werden passend übermittelt und vorzugsweise visualisiert. Sind die Bilddaten der Referenzauflösung übermittelt worden, so werden auch die Bilddaten der anderen Schichten, die sich von der Referenzschicht unterscheiden, übermittelt. Wechselt der Betrachter beispielsweise die darzustellende Schicht, so ändert sich damit auch die Referenzschicht, die gleich der darzustellenden Schicht gesetzt wird.

In einer weiteren Ausgestaltung wird von den Schichten nur ein Sichtfeld übertragen, das entsprechend ein Referenzsichtfeld ist und das ebenfalls beispielsweise durch den Benutzer beliebig wählbar ist. Wechselt in einer Ausgestaltung der Benutzer zwischen den zu visualisierenden Sichtfeldern (führt er bei der Mikroskopie also gleichsam eine laterale Bewegung durch), so wird hierdurch die Referenzschicht (bzw. das für die Referenzschicht relevante Refenz-Sichtfeld) definiert und wird die Datenübertragung gestartet.

In einer Ausgestaltung unterscheiden sich die Schichten hinsichtlich ihrer Lage in einer Bildebene voneinander. Im Beispiel der Mikroskopie wird also eine Bildebene - z. B. mit einer Gegenstandsweite - in unterschiedliche Sichtfelder unterteilt, die jeweils eine andere Lage in dieser Bildebene aufweisen. In dieser Ausgestaltung unterscheiden sich die Schichten daher nicht wie oben beispielhaft diskutiert in Bezug auf ihre Höhe entlang der z-Achse, sondern in Bezug auf ihre x-y-Position. Daher werden also in dieser Ausgestaltung die Bilddaten einer Bildfläche erfindungsgemäß übertragen.

Die Ausführungen und Ausgestaltungen der obigen Vorrichtungen gelten entsprechend auch für das Verfahren, insofern die beschriebenen Merkmale durch das Verfahren realisiert werden. Umgekehrt lassen sich die Verfahrensschritte auch durch entsprechend konfigurierte Ausgestaltungen des Systems bzw. dessen Komponenten realisieren, so dass die Ausführungen und Ausgestaltungen des Verfahrens auch für das System gelten.

Weiterhin bezieht sich die Erfindung auf ein Computerprogramm mit einem Programmcode zur Durchführung des Verfahrens nach einem der obigen Ansprüche bzw. Ausgestaltungen ausgehend von den Ausführungen zum System.

Die Erfindung bezieht sich auch auf ein System zur Datenübertragung insbesondere im Bereich der Visualisierung von Bilddaten sowie auf ein entsprechendes Verfahren zur Datenübertragung. Daher gelten die obigen Ausgestaltungen und Ausführungen auch hier.

Im Einzelnen gibt es eine Vielzahl von Möglichkeiten, das erfindungsgemäße System, das Verfahren und das Computerprogramm auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: eine schematische Ausgestaltung eines erfindungsgemäßen Systems,
- Fig. 2: eine schematische Darstellungen der Bilddaten,
- Fig. 3: ein Flussdiagram eines beispielhaften Ablaufs des erfindungsgemäßen Verfahrens,
- Fig. 4: eine beispielhafte Darstellung der übertragenen Bilddaten gemäß dem Stand der Technik und
- Fig. 5: eine Darstellung der entsprechenden übertragenen Bilddaten bei der Anwendung der Erfindung.

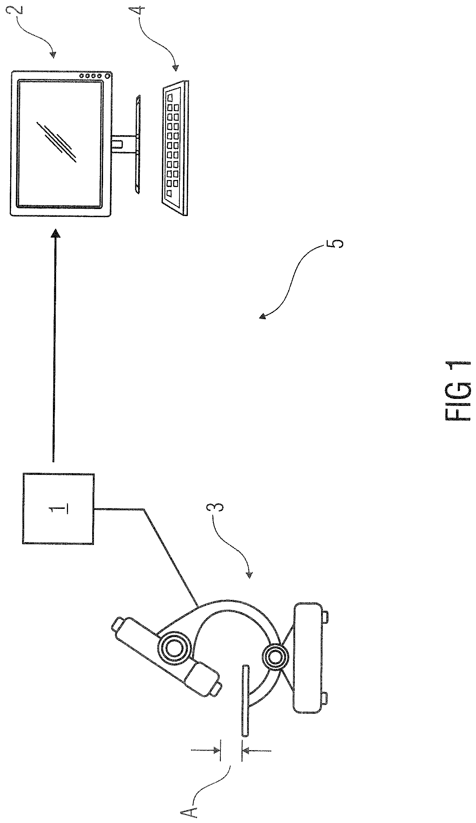

Die Fig. 1 zeigt schematisch eine Realisierung der Verbindung zwischen einer Datenquelle 1 und einer Datensenke 2, wobei die Verbindung hier webbasiert über das Internet stattfinden soll.

Die Datenquelle 1 erhält Bilddaten von einer Aufnahmeeinheit 3, die hier schematisch als Mikroskop angedeutet ist. Angedeutet ist dabei durch A auch der Objektabstand bzw. die Gegenstandsweite zwischen dem Messobjekt und dem Objektiv des Mikroskops 3. Die digitalisierten Bilddaten werden von der Datenquelle 1 an die Datensenke 2 übermittelt, um dort visuell - hier angedeutet durch einen Monitor - dargestellt zu werden. Für die optionale Steuerung der Darstellung der Bilddaten ist hier noch eine Tastatur als Beispiel für eine Nutzerschnittstelle 4 vorhanden. Insgesamt wird ein System 5 gebildet, das die Übertragung von Bilddaten und vor allem die Visualisierung der Bilddaten erlaubt.

Soll mit den digitalisierten Bilddaten das klassische "Scharfstellen" visualisiert werden, so werden Bilddaten in zunehmender Auflösung von der Bilddatenquelle 1 an die Bilddatensenke 2 übertragen und dort dargestellt. Für die flüssige Echtzeitvisualisierung sorgt das erfindungsgemäße System 5 mit den entsprechend ausgestalteten Komponenten.

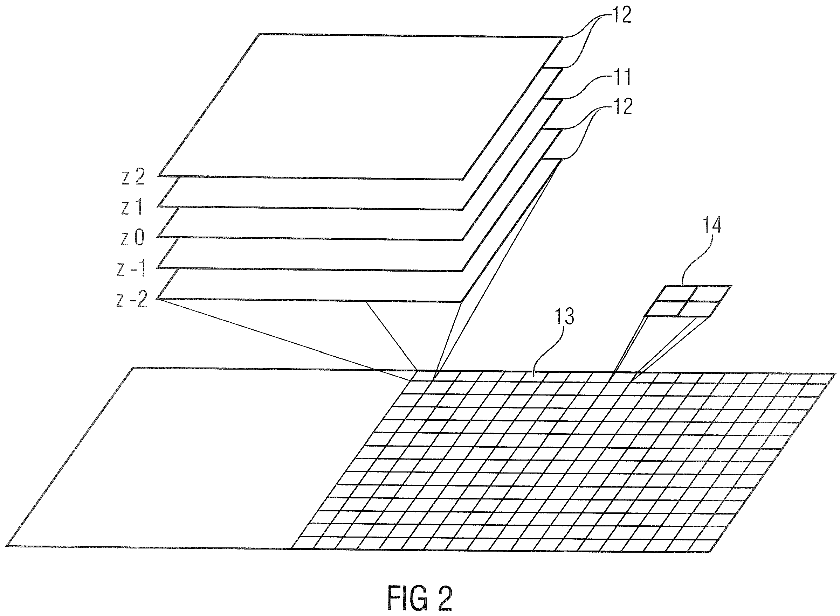

In der Fig. 2 ist schematisch ein Teil der Bilddaten, über die die Bilddatenquelle verfügt, dargestellt. Von der zu vermessenden Szene ist hier nur ein Raster dargestellt, dass sich aus den einzelnen nebeneinander liegenden Sichtfeldern ergibt. Die eigentliche Szene ergibt sich dabei aus dem Messobjekt oder allgemein dem Objekt oder dem Bereich, das durch das verwendete Verfahren vermessen wird bzw. von dem die Bilddaten über die verwendete Aufnahmeeinheit erzeugt werden. In Abhängigkeit von der Aufnahmeeinheit bzw. der damit verwendeten Verfahren definieren sich auch die Aufnahmebedingungen als Unterscheidungskriterium der einzelnen Schichten.

Zu sehen sind die einzelnen Schichten 11, 12, die von dem Mikroskop 3 vom angedeuteten Messobjekt erzeugt worden sind. Die Schichten sind zum einen die Referenzschicht 11, der die horizontale Position z 0 zugeordnet ist, und zum anderen die von der Referenzschicht 11 unterschiedlichen Schichten 12, die sich oberhalb oder unterhalb der Referenzschicht 11 befinden. Diesen Schichten 12 sind entsprechend die Positionen z 1 und z 2 bzw. z -1 und z -2 zugeordnet. Als Referenzschicht 11 kann jedoch allgemein jede der vorhandenen Schichten ausgewählt werden. Die Positionen sind damit den jeweiligen Objektabständen A (vgl. Fig. 1) zugeordnet.

Die Schichten 11, 12 werden unterteilt in einzelne Sichtfelder 13, wobei die Sichtfelder 13 für die Datenübertragung wiederum in Kacheln 14 aufgeteilt werden. Insgesamt werden die Bilddaten der Schichten 11, 12 in Form von Kacheln übertragen.

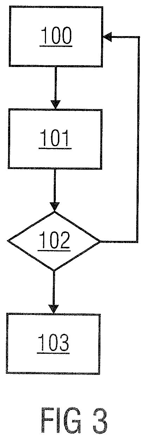

Ein beispielhafter Ablauf des erfindungsgemäßen Verfahrens zur Visualisierung wird in der Fig. 3 dargestellt.

Ausgangspunkt ist dabei das Vorliegen der Bilddaten von unterschiedlichen Schichten (die jeweils eine gemeinsame Szene mit unterschiedlichen Aufnahmebedingungen zeigen) und in unterschiedlichen Auflösungen (die hier nicht zu den die Schichten definierenden Aufnahmebedingungen gehören). Die Bilddaten der einzelnen Schichten liegen dabei hier als Sichtfelder vor bzw. werden in Form von Kacheln übertragen.

Beispielsweise wird über den - nicht dargestellten - Benutzer das Verfahren des Scharfstellens gestartet. Dabei hat der Benutzer insbesondere eine Schicht und ein Sichtfeld für die Visualisierung ausgewählt und daher für das weitere Vorgehen vorgegeben. Daraufhin sendet beispielsweise die Bilddatensenke eine Datenanfrage an die Bilddatenquelle.

Im Schritt 100 übermittelt die Datenquelle Bilddaten nur der Referenzschicht in einer ersten Auflösung an die Bilddatensenke. Dies ist hier insbesondere die geringste Auflösung.

Im Schritt 101 werden die Bilddaten von der Bilddatensenke empfangen und für die Visualisierung entsprechend verarbeitet. Im Ausführungsbeispiel der Fig. 1 werden also beispielsweise die Bilddaten über den Monitor dargestellt.

Im nächsten Schritt 102 ist entscheidend, ob die Auflösung der übertragenen und empfangenen Bilddaten die vorgegebene Referenzauflösung ist. Die Referenzauflösung ist im gezeigten Beispiel die höchste Auflösung, welche für die Bilddaten der Referenzschicht vorliegt.

Handelt es sich - noch - nicht um die Referenzauflösung, so findet der Rücksprung zu Schritt 100 statt und der nächste Satz an Bilddaten mit der nächsten und daher besseren Auflösung wird an die Bilddatensenke übertragen. Anschließend findet wieder im Schritt 102 die Abfrage statt, ob die Referenzauflösung vorliegt.

Da die Referenzauflösung hier die höchste Auflösung ist, werden solange die Bilddaten der Referenzschicht übertragen und dargestellt, bis die beste Auflösung vorliegt, d. h. für den Betrachter verbessert sich ständig das dargestellte Bild, bis das Maximum erreicht ist.

Liegt dieser - als Nachladefall bezeichnete - Fall vor, so werden die Bilddaten der anderen Schichten (also die Schichten der Positionen z 1, z 2, z -1 und z -2, vgl. Fig. 2) im Schritt 103 nachgeladen.

Die Bilddaten der anderen Schichten werden in dem Beispiel nur in einer und insbesondere nur in der jeweils vorliegenden höchsten Auflösung als vorgebbare Nachladeauflösung übertragen.

Daher liegen schlussendlich in der Datensenke zu allen Schichten die Bilddaten in der jeweils höchsten Auflösung vor. Gleichwohl werden für die Visualisierung des Vorgangs des "Scharfstellens" nur für die Referenzschicht die Bilddaten in mehreren Auflösungen von der Bilddatenquelle zur Bilddatensenke übertragen. Daher wird das zu übertragende Datenvolumen deutlich reduziert.

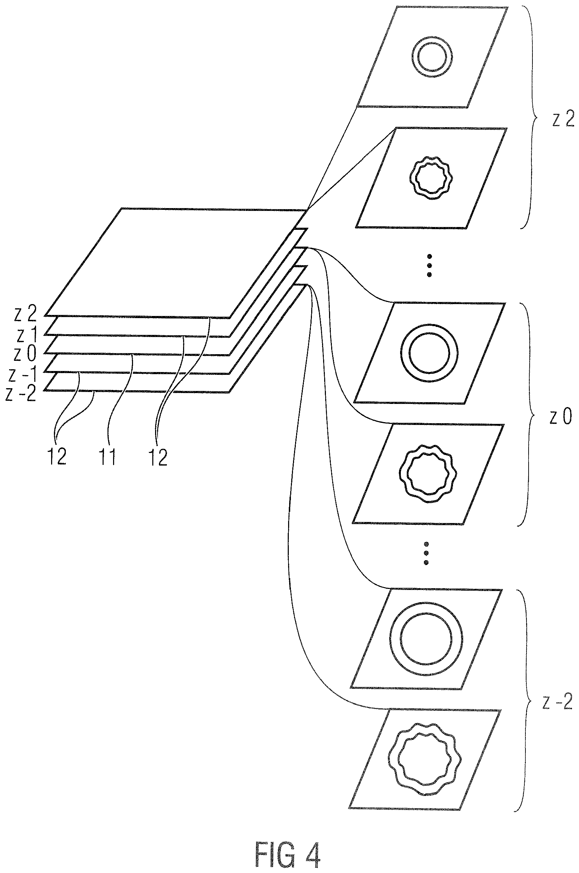

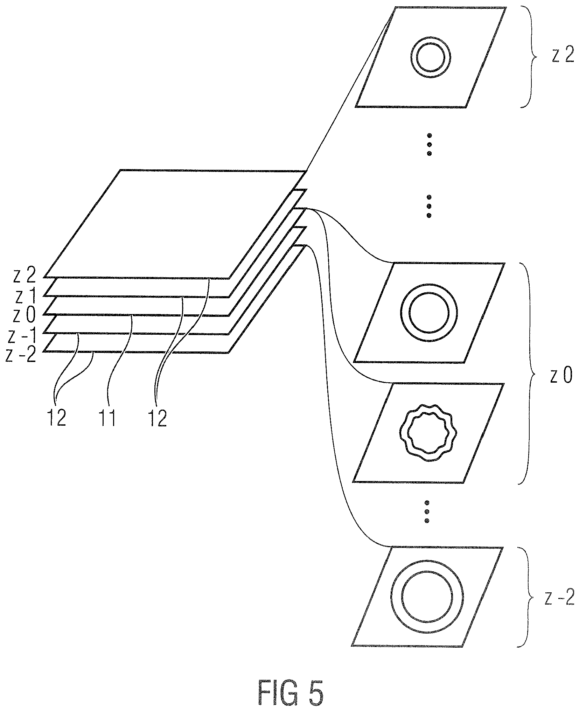

Um den Unterschied der Erfindung zum Stand der Technik zu verdeutlichen, dienen die beiden Abbildungen Fig. 4 und Fig. 5.

In der Fig. 4 ist der Stapel der Schichten 11, 12 der Fig. 2 dargestellt. Die unterschiedlichen Aufnahmebedingungen sind dabei die unterschiedlichen Höhen bzw. die unterschiedlichen Objektabstände. Das Objekt soll hier rein beispielhaft eine ringförmige Struktur aufweisen, die mit abnehmendem Objektabstand jeweils größer erscheint. Weiterhin liegt beispielshaft jede Schicht in zwei Auflösungen vor. Für die Übersichtlichkeit sind nur die jeweils zwei Auflösungen von drei der fünf Schichten (z 2, z 0, z -2) dargestellt. Die obere Darstellung soll dabei jeweils die bessere Auflösung darstellen, die untere die jeweils geringere Auflösung.

Werden wie im Stand der Technik von allen Schichten die Bilddaten mit allen vorhandenen Auflösungen übertragen, so liegen auf der Empfängerseite ausgehend von den fünf Schichten und zwei Auflösungen Bilddaten für insgesamt 10 Bilder mit unterschiedlichen Aufnahmebedingungen und unterschiedlichen Auflösungen vor. Dies bedeutet eine entsprechend hohe Datenmenge.

Bei der Erfindung werden jedoch nur die Bilddaten in unterschiedlichen Auflösungen für die eine Referenzschicht 12, die hier der Position z 0 zugeordnet ist, übertragen. Von den anderen Schichten 11 werden - im hier dargestellten Fall - nur im Nachladefall, wenn von der Bilddatenquelle die Bilddaten der Referenzschicht mit der Referenzauflösung übertragen worden sind, die Bilddaten - hier insbesondere nur - in der einen Nachladeauflösung übertragen. Daher liegen auf der Empfängerseite Bilddaten für nur sechs Abbildungen vor. Dabei sei hier die Referenzauflösung gleich der Nachladeauflösung und gleich der höchsten verfügbaren Auflösung.

Liegen also alle von n Schichten jeweils in m Auflösungen vor, so werden im Stand der Technik die Bilddaten von n ^{∗} m Kacheln übermittelt. Bei der Erfindung reduziert sich dies auf m + (n-1) Kacheln, d. h. auf die Einsparung von (n - 1) ^{∗} (m - 1) Kacheln und der damit je nach Ausgestaltung einhergehenden Datenmenge.

Funktionale Merkmale, die mit Bezug auf eine Vorrichtung beschrieben worden sind, stellen - wie für Fachleute offensichtlich - jeweils auch Merkmale eines entsprechenden Verfahrens dar, das konfiguriert ist, um eine entsprechende Funktionalität zu liefern. Umgekehrt stellen Merkmale, die bei einem Verfahren besprochen worden sind, jeweils auch Merkmale einer entsprechenden Vorrichtung dar, die konfiguriert ist, um entsprechende Merkmale auszuführen.

## Patentansprüche

1. System (5) zur Visualisierung eines Vorgangs eines Scharfstellens mit mindestens einer Bilddatenquelle (1) und einer Bilddatensenke (2),
wobei digitalisierte Bilddaten mindestens zwei unterschiedlichen Schichten (11, 12) zugeordnet sind, wobei für die mindestens zwei unterschiedlichen Schichten (11, 12) Bilddaten in jeweils mindestens zwei unterschiedlichen Auflösungen vorliegen, wobei die mindestens zwei unterschiedlichen Schichten (11, 12) eine gleiche Szene mit unterschiedlichen Aufnahmebedingungen zeigen,
wobei die Bilddatenquelle (1) derartig konfiguriert ist, Bilddaten zur Bilddatensenke (2) zu übermitteln,
dass die Bilddatenquelle (1) derartig konfiguriert ist, die Bilddaten nur einer vorgebbaren Referenzschicht (11) in den mindestens zwei voneinander unterschiedlichen Auflösungen in zunehmender Auflösung von der Bilddatenquelle (1) zu der Bilddatensenke (2) zu übermitteln,
wobei die Bilddatensenke (2) derartig konfiguriert ist, Bilddaten von der Bilddatenquelle (1) zu empfangen und in Bezug auf eine Visualisierung zu verarbeiten,
wobei die Bilddatenquelle (1) derartig konfiguriert ist, Bilddaten der Referenzschicht (11) in den mindestens zwei unterschiedlichen Auflösungen vorrangig zu den Bilddaten von von der Referenzschicht (11) unterschiedlichen Schichten (12) zu der Bilddatensenke (2) zu übermitteln,
wobei die Bilddatenquelle (1) derartig konfiguriert ist, nur in einem Nachladefall, dass die Bilddatenquelle (1) die Bilddaten der Referenzschicht (11) mit einer vorgebbaren Referenzauflösung an die Bilddatensenke (2) übermittelt hat, die Bilddaten von einer vorgebbaren Anzahl von von der Referenzschicht (11) unterschiedlichen Schichten (12) nur in einer vorgebbaren Nachladeauflösung zu der Bilddatensenke (2) zu übermitteln, und
wobei es sich bei der Referenzauflösung um die für die Schichten (11, 12) in den Bilddaten jeweils maximal vorhandene Auflösung handelt,
**dadurch gekennzeichnet,**
**dass** die Bilddatensenke (2) derartig konfiguriert ist, ein Auswählen zu erlauben, von welcher Schicht (11, 12) die Bilddaten zu visualisieren sind, und
**dass** die Bilddatensenke (2) derartig konfiguriert ist, die für die Visualisierung ausgewählte Schicht als Referenzschicht zu setzen.

2. System (5) nach Anspruch 1,
**dadurch gekennzeichnet,**
**dass** die Aufnahmebedingungen eine Schärfentiefeneinstellung oder eine Gegenstandsweite (A) definiert.

3. System (5) nach Anspruch 1 oder 2,
**dadurch gekennzeichnet,**
**dass** die Bilddatenquelle (1) derartig konfiguriert ist, im Nachladefall die Bilddaten der von der Referenzschicht (11) unterschiedlichen Schichten (12) mit der Referenzauflösung zu der Bilddatensenke (2) zu übermitteln.

4. System (5) nach einem der Ansprüche 1 bis 3,
**dadurch gekennzeichnet,**
**dass** die Bilddatenquelle (1) mit mindestens einer Aufnahmeeinheit (3) verbunden ist und dass die Bilddatenquelle (1) die Bilddaten von der Aufnahmeeinheit (3) erhält.

5. System (5) nach einem der Ansprüche 1 bis 4,
**dadurch gekennzeichnet,**
**dass** die Bilddatenquelle (1) derartig konfiguriert ist, die jeweilige Szene der Schichten (11, 12) als Kacheln (14) zur Bilddatensenke (2) zu übertragen.

6. Verfahren zur Visualisierung eines Vorgangs eines Scharfstellens mit einem System gemäß den Ansprüchen 1-5,
wobei digitalisierte Bilddaten mehreren Schichten (11, 12) zugeordnet sind,
wobei die Schichten (11, 12) eine gleiche Szene mit unterschiedlichen Aufnahmebedingungen zeigen,
wobei die Bilddaten für die Schichten (11, 12) in unterschiedlichen Auflösungen vorliegen,
wobei die Bilddaten einer Referenzschicht (11) in den unterschiedlichen Auflösungen vorrangig zu den Bilddaten von von der Referenzschicht (11) unterschiedlichen Schichten (12) von einer Bilddatenquelle (1) zu einer Bilddatensenke (2) in zunehmender Auflösung übermittelt und in Bezug auf eine Visualisierung verarbeitet werden, und
wobei nur in einem Fall, dass die Bilddaten der Referenzschicht (11) mit einer vorgebbaren Referenzauflösung, bei der es sich um die für die Schichten (11, 12) in den Bilddaten jeweils maximal vorhandene Auflösung handelt, ausgegeben worden sind, die Bilddaten von einer vorgebbaren Anzahl von von der Referenzschicht (11) unterschiedlichen Schichten (12) nur in einer vorgebbaren Nachladeauflösung von der Bilddatenquelle (1) zu der Bilddatensenke (2) übermittelt und ausgegeben werden.

## Claims

1. A system (5) for visualizing a process of focusing, comprising at least one image data source (1) and one image data sink (2),
wherein digitalized image data are associated to at least two different layers (11, 12), wherein, for the at least two different layers (11, 12), image data are present in at least two different resolutions each, wherein the at least two different layers (11, 12) show a common scene at different conditions of taking a picture,
wherein the image data source (1) is configured to transfer image data to the image data sink (2),
the image data source (1) is configured to transfer from the image data source (1) to the image data sink (2) the image data of only one presettable reference layer (11) in the at least two different resolutions with an increasing resolution,
wherein the image data sink (2) is configured to receive image data from the image data source (1) and process same relative to visualization,
wherein the image data source (1) is configured to transfer to the image data sink (2) image data of the reference layer (11) in the at least two different resolutions in a prioritized manner relative to the image data from layers (12) different from the reference layer (11),
wherein the image data source (1) is configured to transfer to the image data sink (2), only in a reload case where the image data source (1) has transferred the image data of the reference layer (11) to the image data sink (2) at a presettable reference resolution, the image data from a presettable number of layers (12) different from the reference layer (11) only in a presettable reload resolution, and wherein the reference resolution is the respective maximum resolution present for the layers (11, 12) in the image data,
**characterized in that**
the image data sink (2) is configured to allow selecting from which layer (11, 12) image data are to be visualized, and
the image data sink (2) is configured to set the layer selected for visualization as the reference layer.

2. The system (5) in accordance with claim 1,
**characterized in that**
the conditions of taking a picture define a depth of focus setting or object width (A).

3. The system (5) in accordance with claim 1 or 2,
**characterized in that**
the image data source (1) is configured to transfer to the image data sink (2), in a reload case, the image data from the layers (12) different from the reference layer (11) at the reference resolution.

4. The system (5) in accordance with any of claims 1 to 3,
**characterized in that**
the image data source (1) is connected to at least one picture-taking unit (3) and the image data source (1) receives the image data from the picture-taking unit (3).

5. The system (5) in accordance with any of claims 1 to 4,
**characterized in that**
the image data source (1) is configured to transmit to the image data sink (2) the respective scene of the layers (11, 12) in the form of tiles (14).

6. A method for visualizing a process of focusing using a system in accordance with any of claims 1 to 5,
wherein digitalized image data are associated to several layers (11, 12), wherein the layers (11, 12) show a common scene at different conditions of taking a picture,
wherein the image data for the layers (11, 12) are present in different resolutions, wherein the image data of a reference layer (11) in the different resolutions are transferred from an image data source (1) to an image data sink (2) in a prioritized manner relative to the image data from layers (12) different from the reference layer (11) with an increasing resolution and processed relative to visualization, and wherein only in a case where the image data of the reference layer (11) have been output at a presettable reference resolution which is the respective maximum resolution present for the layers (11, 12) in the image data, the image data from a presettable number of layers (12) different from the reference layer (11) are transferred from the image data source (1) to the image data sink (2) and output only in a presettable reload resolution.

## Revendications

1. Système (5) pour visualiser une opération de mise au point avec au moins une source de données d'image (1) et un puits de données d'image (2),
dans lequel les données d'image numérisées sont associées à au moins deux couches différentes (11, 12), dans lequel sont présentes, pour les au moins deux couches différentes (11, 12), des données d'image avec au moins deux résolutions différentes, dans lequel les au moins deux couches différentes (11, 12) montrent une même scène avec différentes conditions de capture, dans lequel la source de données d'image (1) est configurée pour transmettre les données d'image au puits de données d'image (2), de sorte que la source de données d'image (1) est configurée pour transmettre les données d'image uniquement d'une couche de référence pouvant être prédéterminée (11) avec les au moins deux résolutions différentes l'une de l'autre à résolution croissante de la source de données d'image (1) au puits de données d'image (2), dans lequel le puits de données d'image (2) est configuré pour recevoir et traiter en vue d'une visualisation les données d'image de la source de données d'image (1),
dans lequel la source de données d'image (1) est configurée pour transmettre les données d'image de la couche de référence (11) avec les au moins deux résolutions différentes en priorité sur les données d'image des couches (12) différentes de la couche de référence (11) vers le puits de données d'image (2),
dans lequel la source de données d'image (1) est configurée pour transmettre, uniquement dans un cas de recharge où la source de données d'image (1) a transmis les données d'image de la couche de référence (11) avec une résolution de référence pouvant être prédéterminée au puits de données d'image (2), les données d'image d'un nombre pouvant être prédéterminé de couches (12) différentes de la couche de référence (11) uniquement avec une résolution de recharge pouvant être prédéterminée au puits de données d'images (2), et
dans lequel il s'agit, pour la résolution de référence, de la résolution chaque fois maximale présente pour les couches (11, 12) dans les données d'image,
**caractérisé par le fait**
**que** le puits de données d'image (2) est configuré pour permettre une sélection de la couche (11, 12) de laquelle doivent être visualisées les données d'image, et
**que** le puits de données d'image (2) est configuré pour établir la couche sélectionnée pour la visualisation comme couche de référence.

2. Système (5) selon la revendication 1,
**caractérisé par le fait**
**que** les conditions de capture définissent un réglage de la profondeur de champ ou une largeur d'objet (A).

3. Système (5) selon la revendication 1 ou 2,
**caractérisé par le fait**
**que** la source de données d'image (1) est configurée pour transmettre, en cas de recharge, les données d'image des couches (12) différentes de la couche de référence (11) avec la résolution de référence au puits de données d'image (2).

4. Système (5) selon l'une des revendications 1 à 3,
**caractérisé par le fait**
**que** la source de données d'image (1) est connectée à au moins une unité de capture (3) et que la source de données d'image (1) obtient les données d'image de l'unité de capture (3).

5. Système (5) selon l'une des revendications 1 à 4,
**caractérisé par le fait**
**que** la source de données d'image (1) est configurée pour transmettre la scène respective des couches (11, 12) sous forme de carreaux (14) au puits de données d'image (2).

6. Procédé de visualisation d'une opération de mise au point avec un système selon les revendications 1 à 5,
dans lequel les données d'image numérisées sont associées à plusieurs couches (11, 12),
dans lequel les couches (11, 12) montrent une même scène avec des conditions de capture différentes,
dans lequel les données d'image pour les couches (11, 12) sont présentes avec différentes résolutions,
dans lequel les données d'image d'une couche de référence (11) avec les différentes résolutions sont transmises en priorité sur les données d'image de couches (12) différentes de la couche de référence (11) d'une source de données d'image (1) à un puits de données d'image (2) avec une résolution croissante et traitées en vue d'une visualisation, et
dans lequel, uniquement au cas où les données d'image de la couche de référence (11) ont été sorties avec une résolution de référence pouvant être prédéterminée, pour laquelle il s'agit de la résolution chaque fois maximale présente dans les données d'image pour les couches (11, 12), les données d'image d'un nombre pouvant être prédéterminé de couches (12) différentes de la couche de référence (11) ne sont transmises et sorties qu'avec une résolution de recharge pouvant être prédéterminée de la source de données d'image (1) vers le puits de données d'image (2).
